# EUROPÄISCHE PATENTANMELDUNG

(11) **EP 3 613 382 A1**
(43) Veröffentlichungstag der Anmeldung: **26.02.2020**
(21) Anmeldenummer: 18190558.9
(22) Anmeldetag: 23.08.2018
(51) Int. Cl.: A61C 19/10

(54) **SYSTEM AUS EINEM FARBSELEKTIONSKÖRPER UND EINEM VERFAHREN ZUR BESTIMMUNG VON ZAHNFARBEN**

(71) Anmelder: Ivoclar Vivadent AG, 9494 Schaan (LI)
(72) Erfinder: Lerch, Stefan, 3006 Bern (CH); Schlegel, Manuel, 8887 Mels (CH)
(74) Vertreter: Baronetzky, Klaus

(57) **Zusammenfassung**

Es ist ein Farbwahlhilfskörper (10) für Zielobjekte (34) wie Dentalobjekte, mit einem Basiskörper vorgesehen. Der Basiskörper (12) weist mindestens zwei Innenflanken (16, 18, 20) auf, die sich quer, insbesondere rechtwinklig, zueinander erstrecken, von welchen Innenflanken ausgehend er sich nach außen wegerstreckt, bis zu Außenflanken (22).

Der Basiskörper (12) erstreckt sich zweidimensional betrachtet zwischen den Innenflanken und den Außenflanken, mit Farbwahlflächen (30) und Referenzmerkmalen (32), die auf dem Farbwahlhilfskörper angeordnet sind. Der Farbwahlhilfskörper ist so in der Nähe eines Zielobjektes (34) plazierbar ist, dass eine durch zwei Zielobjekt-Nähepunkte (38, 40, 42) auf den Innenflanken verlaufende Gerade das Zielobjekt überstreicht.

## Beschreibung

Die Erfindung betrifft einen Farbwahlhilfskörper, gemäß dem Oberbegriff von Anspruch 1.

Farbschlüssel sind seit langem bekannt, beispielsweise aus der DE 195 09 830 A1. Ein derartiger Farbschlüssels dient dazu, die für den Patienten bestmögliche Farbwahl eines Ersatzzahnes zu gewährleisten.

Ein derartiger Ersatzzahn ist beispielsweise von zwei gesunden Zähnen umgeben, oder hat einen gesunden Nachbarzahn. Das Bestreben ist, den Zahnersatz farblich an die Umgebung anzupassen, damit die Dentalrestauration möglichst unauffällig gelingt.

In der Praxis wird der Farbschlüssel in die Nähe der gesunden Zähne gehalten, und zwar versuchsweise mit verschiedenen Farbwahlflächen, bis diejenige Farbwahlflächen ermittelt ist, die dem Nachbarzahn am nächsten kommt.

Ein Problem hierbei ist es, dass Zähne typischerweise einen Farbverlauf haben und inzisal heller und weißer sind als gingival. Je nachdem, an welche Stelle der Zahnarzt den Zahnschlüssel mit der betreffenden Farbwahlfläche hält, wird die Ähnlichkeit anders beurteilt.

Insofern besteht eine Verbesserung in der Lösung gemäß der EP 2 255 749 A1. Bei dieser Lösung sind die Farbwahlflächen gegenüber handelsüblichen Zahnschlüsseln deutlich verkleinert, so dass.jede Farbwahlfläche nur einen Bruchteil der Abmessungen eines Zahns hat.

Diese Lösung hat den Vorteil, dass mehrere Farbwahlflächen vergleichshalber neben den gesunden Zahn gehalten werden können, um einen besseren Farben-Vergleich durchführen zu können.

Derart kleine Farbwahlflächen sind zum einen schlecht sichtbar und zum anderen verschmutzungsanfälliger.

Wenn beispielsweise Speichel auf den Farbschlüssel gerät, reflektiert der betreffende Teil des Farbschlüssel stärker, was einen erheblich anderen optischen Eindruck macht.

Versuche mit unterschiedlichen Testpersonen mit den bekannten Farbschlüssel, die Farbwahlhilfskörper aufweisen, haben ergeben, dass die Testpersonen eine farbliche Übereinstimmung und eine farbliche Ähnlichkeit sehr unterschiedlich wahrnehmen, wenn Sie die bekannten Farbschlüssel in üblicher Weise verwenden.

Demgegenüber liegt der Erfindung die Aufgabe zugrunde, einen Farbwahlhilfskörper gemäß dem Oberbegriff von Anspruch 1 zu schaffen, der hinsichtlich der Zuverlässigkeit der Beurteilung eines Farbvergleich-Ergebnisses verbessert ist.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, den Basiskörper des erfindungsgemäßen Farbwahlhilfskörpers mit mindestens zwei Innenflanken auszustatten, die sich jedenfalls nicht zueinander in der Verlängerung erstrecken, sondern in einem Winkel. Dieser Winkel kann stumpf oder spitz sein, aber auch rechtwinklig.

Auf der anderen, der gegenüberliegenden Seite des Basiskörpers erstrecken sich dann zwei Außenflanken bevorzugt ebenfalls nicht in der Verlängerung zueinander, sondern quer zueinander.

Der Basiskörper bildet insofern ein zweidimensionales oder dreidimensionales Element mit einem länglichen und abgeknickten Verlauf. Anstelle des Knicks kann auch ein Bogen realisiert sein, so dass der Übergang zwischen den beiden genannten Innenflanken rund ist.

Das längliche Element, also der Basiskörper, weist Farbwahlflächen und Referenz-Merkmale auf. Diese sind in geeigneter Weise angeordnet, bevorzugt so, dass die Farbwahlflächen den Innenflanken näher sind als die Referenzmerkmale.

Erfindungsgemäß ist es nun vorgesehen, den Farbwahlhilfskörper mit dem Basiskörper so in der Nähe eines Zielobjektes zu platzieren, dass sowohl die erste als auch die zweite innenflanke dem Zielobjekt benachbart ist. Durch die Nachbarschaft ergibt sich auf jeder Innenflanke ein Zielobjekt-Nähepunkt. Eine Gerade, die zwischen diesen beiden Nähepunkten verlaufen würde oder gelegt wird, überstreicht das Zielobjekt.

Dies führt dazu, dass beide Innenflanken und die den Innenflanken benachbarten Farbwahlflächen nahe an dem Zielobjekt angeordnet sind, und damit auch der vorstehend genannte Knick oder Bogen zwischen den Innenflanken.

Bevorzugt sind die Zielobjekte Dentalobjekte wie Nachbarzähne von zu erzeugenden Dentalrestaurationen. Die Farbwahlflächen sind dann dem zu beurteilenden Nachbarzahn so nahe wie möglich. Insbesondere umgeben sie ihn von mindestens zwei Seiten. Erfindungsgemäß günstig ist es, wenn genau ein Zahn dem Vergleichsergebnis zugrunde gelegt wird. Dies wird ebenfalls durch den abgeknickten und bevorzugt im wesentlichen U-förmigen Verlauf des erfindungsgemäßen Basiskörpers realisiert. Der Basiskörper deckt dann in Doppelfunktion die störenden und nicht interessierenden Bereiche außerhalb des Vergleichszahnes ab.

Überraschend ergibt sich durch diese Maßnahme eine wesentlich verbessertes Vergleichsergebnis, wie Versuche mit den Testpersonen gezeigt haben.

Die erfindungsgemäße Lösung lässt sich auch mit einem anderen Modell definieren. Hierzu wird zunächst einen Kreis festgelegt, außerhalb dessen sich der Basiskörper erstreckt. Der Innkreis ist dafür bestimmt, mindestens einen großen Teil des Zielobjekt, also beispielsweise eines Zahns, aufzunehmen. Der Innenkreis berührt den Basiskörper an zwei oder drei Innenflanken an Stellen, die deutlich voneinander beabstandet sind. Der Abstand kann über einen Innenkreiswinkel von mindestens 70 Grad der beiden Berührungsstellen definiert werden.

Hierdurch ist sichergestellt, dass sich die Innenflanken des Basiskörpers mindestens teilweise schräg zueinander erstrecken. Auch die Realisierung runder Innenflanken, die sich teilweise an den Innenkreis anlehnen, ist bei diesem Modell nicht ausgeschlossen.

Außerhalb des Innenkreises erstreckt sich der Basiskörper mit Farbwahlflächen, die wiederum dem Innenkreis recht nahe sind.

Die Nähe ist durch einen Mittelkreis definiert, dessen Radius größer als der Radius des Innenkreises ist, wobei sich beide Kreise zueinander konzentrisch erstrecken.

In dem Raum zwischen Innenkreis und Mittelkreis erstrecken sich die Farbwahlflächen.

Außerhalb des Mittelkreises ist ein wiederum konzentrischer Außenkreis definiert, innerhalb dessen sich der Basiskörper und auch die Referenzmerkmale erstrecken.

In vorteilhafter Ausgestaltung erstrecken sich die Referenzmerkmale zwischen dem Mittelkreis und dem Außenkreis.

Der Außenkreis hat einen Radius von weniger als 25 mm und bevorzugt einen Durchmesser von etwa 20 mm.

Auch bei diesem Modell ergibt sich der erfindungsgemäß überraschende Vorteil, dass durch die mindestens teilweise das Zielobjekt umgebende Anordnung der Farbwahlflächen bei gleichzeitiger enge Nachbarschaft zwischen Zielobjekt und Farbwahlflächen und Abdeckung von nicht interessierenden Bereichen durch den Basiskörper ein verbessertes Vergleichsergebnis erzielt wird.

Erfindungsgemäß günstig ist es, wenn Referenzmerkmale, beispielsweise Referenzflächen näher dem äußeren Bereich des Basiskörpers angebracht sind. Derartige Referenzmerkmale können zur colorimetrischen, aber auch zur visuellen, aber auch zur geometrischen Referenzierung dienen.

In vorteilhafter Weiterbildungen der Erfindung sind Kodierparameter auf dem Farbwahlhilfskörper angebracht. Diese können im Falle aus einer Mehrzahl von Kodierflächen bestehen, aber auch aus lediglich einer Kodierfläche. Hinsichtlich der Art des Codes sind keine Beschränkungen vorgesehen. Als Beispiel sei hier der QR Code erwähnt.

Das Zielobjekt kann eine Dentalrestauration, ein natürlicher Zahn, aber z.B. auch ein Zahnstumpf oder die Gingiva.

Die Innenkontur und die Innenflanken des Farbwahlhilfskörper kann so gekrümmt sein, dass sie an die Zahnaußenkontur angepasst ist.

Der Basiskörper kann sich U-förmig, L-förmig oder ringförmig erstrecken und die Innenflanken die Innenflanken des U, des L oder des Rings sein.

In vorteilhaften Ausgesatltung des erfindungsgemäßen Farbwahlhilfskörper ist es vorgesehen, dass zwei Farbwahlflächen mit gleicher Helligkeit und Farbe einander bezogen auf das Zielobjekt gegenüberliegen, bevorzugt diametral.

Dies kann auch für Farbwahlflächen mit einem Farbabstand Delta E < 0,6 gelten.

Bevorzugt ist es, dass Referenzmerkmale in Flächenform auf dem Farbwahlhilfskörper angebracht sind, die voneinander beabstandet sind, insbesondere einander diametral gegenüberliegen, welche Referenzmerkmaleflächen eine eindeutige geometrische Zuordnung zu den Innenflanken aufweisen, wobei insbesondere zwei Referenzmerkmale den gleichen Abstand zu den je benachbarten Innenflanken aufweisen.

Die Farbwahlflächen können Zahnfarben, Stumpffarben und/oder Gingivafarben aufweisen.

Günstig ist es, wenn der Basiskörper außen im Wesentlichen hufeisenförmig ist und die Referenzmerkmale sich soweit wie möglich beabstandet von den Innenflanken an den Außenflanken der Seitenschenkel des Hufeisens befinden.

Die Außenschenkel können auch gegenüber dem Mittelschenkel für die Aufnahme der Referenzmerkmale verbreitert sein.

Weitere Vorteile, Einzelheiten und Merkmale ergeben sich aus der nachfolgenden Beschreibung mehrerer Ausführungsbeispiele der Erfindung anhand der Zeichnung.

Es zeigen:
Fig. 1 eine Ansicht eines erfindungsgemäßen Farbwahlhilfskörpers in einer Ausführungsform;
Fig. 2 eine schematische Ansicht eines erfindungsgemäßen Farbwahlhilfskörpers;
Fig. 3 eine weitere Ausführungsform eines erfindungsgemäßen Farbwahlhilfskörpers in schematischer perspektivische Darstellung; und
Fig. 4 eine weitere Ausführungsform eines erfindungsgemäßen Systems aus einer Kameravorrichtung und einem Farbwahlhilfskörper in erfindungsgemäße Weise.

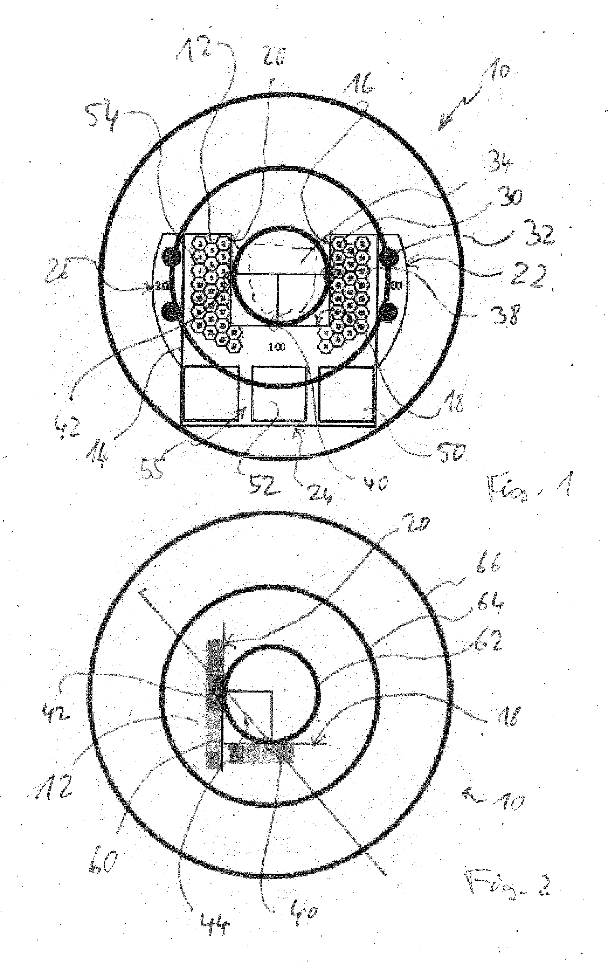

In Fig. 1 ist ein Farbwahlhilfskörper 10 dargestellt, der eine U-Form oder eine Hufeisenform aufweist. Wie ersichtlich ist, weicht der tatsächliche Aufbau von sowohl von der U-Form als auch von der Hufeisenform ab; auch solche wie die dargestellten Formen seien hierunter subsumiert.

Der Farbwahlhilfskörper 10 weist einen Basiskörper 12 auf. Der Basiskörper 12 ist bevorzugt auf einem festen Material wie Kunststoff ausgebildet. Ein Teil des Farbwahlhillskörpers 10 ist hingegen als Einwegteil ausgebildet und von dem Basiskörper entfernbar.

Im vorliegenden Falle ist auf dem Basiskörper 12 ein Etikett 14 aufgeklebt, das verschiedene Elemente trägt, die nachfolgend beschrieben werden.

Der Basiskörper 12 ist insofern formbestimmend, wobei die erfindungsgemäße Form des Basiskörpers und damit des Farbwahlhilfskörpers 10 zur erfindungsgemäßen Funktion wesentlich beiträgt.

Der Basiskörper 12 weist 2 Innenflanken 16 und 18 auf, die sich quer zueinander erstrecken. Im dargestellten Ausführungsbeispiel ist eine 3. Innenflanke 20 vorgesehen, die sich wiederum quer zur Innenflanke 18 erstreckt. Hier erstrecken sich die Innenflanken 16 und 20 rechtwinklig zur Innenflanke 18, wobei dies lediglich beispielhaft ist.

Der Basiskörper 12 ist außen durch Außenflanken 22, 24, 26 begrenzt. Die funktionsrelevante Teile des Farbwahlhilfskörpers 10 erstrecken sich zwischen den Innenflanken 16, 18 und 20 und den Außenflanken 22, 24 und 26. Hierzu gehören Farbwahlflächen 30 und Referenzmerkmale 32. Die Farbwahlflächen 30 erstrecken sich in der Nähe eines Zielobjekt 34. Das Zielobjekt 34 ist den Innenflanken 16, 18 und 20 benachbart und im Beispielsfalle im von diesen aufgespannten Raum angeordnet.

Jede innenflanke hat mindestens einen Nähepunkt, an dem sie dem Zielobjekt 34 benachbart und nahe ist. Hier seien die Nähepunkte 38 und 40 angesprochen. Für die Innenflanke 20 sei auf den Nähepunkt 42 verwiesen.

Eine durch zwei dieser Punkte, also 38 und 40, 40 und 42, oder 38 und 42, verlaufende Gerade 44 überstreicht das Zielobjekt 34.

Mit anderen Worten gesagt ist das Zielobjekt 34 den schräg oder quer zueinander verlaufenden Innenflanken 16, 18, 20 eng benachbart und mindestens teilweise in dem von diesen aufgespannten Raum oder Bereich aufgenommen.

Außerhalb der Farbwahlflächen 30 sind die Referenzmerkmale 32 auf dem Farbwahlhilfskörper 10 angebracht. Sie sind damit den Außenflanken 22, 24, 26 benachbart.

Die Referenzmerkmale 32 können entweder auf dem Basiskörper 12 oder auf dem Etikett 14 angebracht sein. In einer weiteren Ausgestaltung sind Referenzmerkmale 32 sowohl auf dem Basiskörper 12 als auch auf dem Etikett 14 angebracht.

Der Farbwahlhilfskörper 10 weist ferner Kodier-Parameter mit Kodierflächen 50 auf. Diese erstrecken sich im Bereich eines Mittelschenkels 52 des Basiskörpers 12. Sie sind der Außenflanke 24 benachbart.

In dem dargestellten Ausführungsbeispiel weist der Mittelschenkel 52 eine etwas größere Breite als die Seitenschenkel 54 auf, die sich von ihm weg erstrecken.

Der untere Bereich des Mittelschenkels 52 dient auch als Greifhandhabe 55 für das Greifen und Positionieren des erfindungsgemäßen Farbwahlhilfskörpers 10.

Aus Fig. 2 ist eine weitere Ausführungsform eines erfindungsgemäßen Farbwahlhilfskörpers 10 schematisch dargestellt. Hier ist eine Innenflanke 20 und eine Innenflanke 18 des Basiskörpers 12 dargestellt, wobei sich die Innenflanken 18 und 20 an einer Stelle berühren, im Bereich einer Ecke 60.

Der Basiskörper 10 erstreckt sich außerhalb eines Innenkreises 62. Der Innenkreis 62 berührt die Innenflanken 18 und 20 an zwei Stellen 40 und 42, die sich bezogen auf den Innenkreis 62 in einem Winkel von 90° zueinander erstrecken.

Dem Innenkreis 62 benachbart sind die Farbwahlflächen 30 angebracht. Sie sind innerhalb eines Mittelkreises 64 angeordnet.

Noch weiter außerhalb, nämlich innerhalb eines Außenkreises 66 sind in Fig. 2 nicht dargestellte Referenzmerkmale 32 angeordnet. Zugleich erstreckt sich der gesamte der Basiskörper 12 innerhalb des Außenkreises 66.

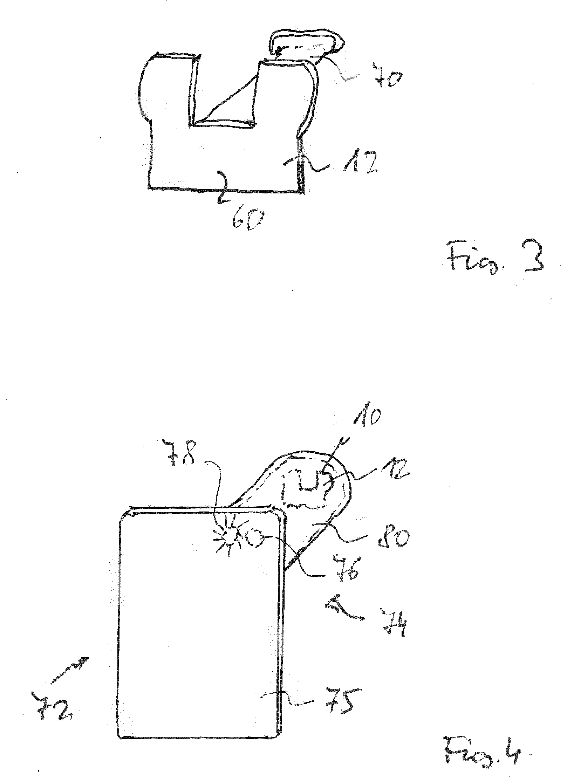

Aus Fig. 3 ist eine weitere Ausführungsform eines erfindungsgemäßen Farbwahlhilfskörpers 10 ersichtlich. Von dem Basiskörper 12 nach rückwärts erstreckt sich ein Beisselement 70. Das Beisselement 70 dient dazu, in an sich bekannter Weise zwischen den Kiefern oder Zahnbögen eines Patientens eingeklemmt zu werden, um eine feste Positionierung an der vom Zahnarzt gewünschten Stelle zu ermöglichen.

Aus Fig. 4 ist ein System 72 aus einer Kameravorrichtung 74 und dem erfindungsgemäßen Farbwahlhilfskörper 10 ersichtlich. Die Kameravorrichtung 74 kann beispielsweise an einem Smartphone 75 ausgebildet sein, dass zudem neben einer Kamerainse 76 eine Blitz-LED 78 aufweist.

Für die Bereitstellung fester Aufnahmeparameter ist ein Abstandshalter 80 vorgesehen. Dieser besteht aus einem kurzen Rohr fester Länge, das beispielsweise auch an dem Basiskörper 12 oder gegebenfalls an dem Smartphone 75 befestigt sein kann.

Der Abstandshalter 80 besteht aus einem lichtdichten Material und schirmt damit Fremdlicht ab. Damit entstehen gleiche Aufnahmeparameter unabhängig von der Umgebungslicht-Situation. Zudem sind durch den Abstandshalter 80 auch stets die gleichen Fokussierbedingungen realisiert. Er hat einen Innendurchmesser und damit eine Innenfläche, die gerade so groß ist, dass der Basiskörper 12 hereinpasst. Er ist hohl und rohrförmig, kann aber einen beliebigen Querschnitt, also auch abweichend von der Kreisform haben.

Mit der erfindungsgemäßen Kameravorrichtung 74 und mit der entsprechenden Bildanalyse ist eine noch bessere Bestimmung einer Ziel-Zahnfarbe basierend auf dem Vergleichsergebnis möglich.

## Patentansprüche

1. Farbwahlhilfskörper für Zielobjekte wie Dentalobjekte (34), mit einem Basiskörper (12), **dadurch gekennzeichnet, dass** der Basiskörper mindestens zwei Innenflanken (16, 18, 20) aufweist, die sich quer, insbesondere rechtwinklig, zueinander erstrecken, von welchen Innenflanken ausgehend er sich nach außen wegerstreckt, bis zu Außenflanken (22, 24, 26), und wobei der Basiskörper sich zweidimensional betrachtet zwischen den Innenflanken und den Außenflanken erstreckt, mit Farbwahlflächen (30) und Referenzmerkmalen (32), die auf dem Farbwahlhilfskörper (10) angeordnet sind, und dass der Farbwahlhilfskörper so in der Nähe eines Zielobjektes platzierbar ist, dass eine durch zwei Zielobjekt-Nähepunkte (38, 40, 42) auf den Innenflanken verlaufende Gerade (44) das Zielobjekt (34) überstreicht.

2. Farbwahlhilfskörper für Zielobjekte wie Dentalobjekte, mit einem Basiskörper, **dadurch gekennzeichnet, dass** der Basiskörper sich außerhalb eines Innenkreises (62), mit einem Radius zwischen 4 und 9 mm, erstreckt, der mindestens an 2 Stellen eine Innenkontur des Basiskörpers mit mind. 2 Innenflanken (16, 18, 20) berührt, welche sich - bezogen auf den Innenkreis-Mittelpunkt - in einem Winkel von mindestens 70 Grad zueinander erstrecken und in welchem Innenkreis mindestens ein Bereich des Zielobjekts (34) aufgenommen ist, dass Farbwahlflächen (30) auf dem Basiskörper (12) innerhalb eines zu dem Innenkreis konzentrischen Mittelkreis (64) mit einem Radius kleiner gleich 25mm, insbesondere kleiner gleich 15 mm ausgebildet sind, und dass Referenzmerkmale (32) auf dem Basiskörper innerhalb eines den Basiskörper umgebenden und an mindestens einem Punkt dessen Außenkontur berührenden, zu dem Innenkreis konzentrischen Außenkreis (66) mit einem Radius kleiner gleich 25 mm ausgebildet sind.

3. Farbwahlhilfskörper nach einem der vorhergehenden Ansprüche, **dadurch gekennzeichnet**, das die geometrischen Angaben in diesen sich auf eine zweidimensionale Projektion von dreidimensionalen Gebilden beziehen, und die Flanken (16, 18, 20, 22, 24, 26) als Teil der Kontur gerade oder gekrümmt sein können.

4. Farbwahlhilfskörper nach einem der vorhergehenden Ansprüche, **dadurch gekennzeichnet, dass** mindestens ein Teil des Farbwahlhilfskörpers (10) als Einwegteil ausgebildet ist, wobei entweder dieser Teil des Farbwahlhilfskörpers von dem Basiskörper (12) trennbar ist, insbesondere entfernbar, ist oder der Basiskörper selbst als Einwegteil ausgebildet ist.

5. Farbwahlhilfskörper nach einem der vorhergehenden Ansprüche, **dadurch gekennzeichnet, dass** mindestens zwei Farbwahlflächen (30) einen bekannten Farbabstand, der insbesondere Null ist und/oder deren Helligkeit gleich ist, und voneinander beabstandet angeordnet sind, insbesondere benachbart unterschiedlichen Flanken (16, 18, 20) des Basiskörpers (12).

6. Farbwahlhilfskörper nach einem der vorhergehenden Ansprüche, **dadurch gekennzeichnet, dass** mindestens ein Teil, insbesondere 10 % bis 100%, der Farbwahlflächen (30) den Innenflanken (16, 18, 20) und/oder der Innenkontur benachbart, insbesondere an diese angrenzend, angebracht sind.

7. Farbwahlhilfskörper nach einem der vorhergehenden Ansprüche, **dadurch gekennzeichnet, dass** die Farbwahlflächen (30) zueinander gleiche geometrische Formen aufweisen und insbesondere als Rechtecke oder Quadrate ausgebildet sind, die aneinander angrenzen oder um weniger als ein Drittel ihrer Erstreckung beabstandet sind.

8. Farbwahlhilfskörper nach einem der vorhergehenden Ansprüche, **dadurch gekennzeichnet, dass** der Farbwahlhilfskörper (10) Kodierparameter (50) zur Identifizierung und/oder Anwendung des Farbwahlhilfskörpers aufweist, insbesondere in aufgedruckter Form, wobei die Kodierparameter (50) insbesondere von den Außenflanken (22, 24, 26) des Farbwahlhilfskörpers und des Basiskörpers (12) weniger beabstandet als von den Innenflanken (16, 18, 20) des Farbwahlhilfskörpers und des Basiskörpers sind.

9. Farbwahlhilfskörper nach einem der vorhergehenden Ansprüche, **dadurch gekennzeichnet, dass** die Farbwahlflächen (30) und insbesondere die Kodierparameter (50) auf einem ablösbaren Etikett (14) aufgedruckt sind, das auf dem Basiskörper (12) aufklebbar ist, wobei insbesondere die Referenzmerkmale (32) auf dem Basiskörper außerhalb des Etiketts (14) angebracht und auch bei aufgeklebtem Etikett sichtbar sind.

10. Farbwahlhilfskörper nach einem der vorhergehenden Ansprüche, **dadurch gekennzeichnet, dass** die Anzahl der Farbwahlflächen (30) zwischen 3 und 100, je die Fläche zwischen 0,126 und 10 mm², die Breite des Basiskörper (12) kleiner gleich 40 mm, und seine Höhe kleiner gleich 30 mm beträgt.

11. Farbwahlhilfskörper nach einem der vorhergehenden Ansprüche, **dadurch gekennzeichnet, dass** die Farbwahlflächen (30) mind. 3 verschieden Farben haben.

12. Farbwahlhilfskörper nach einem der vorhergehenden Ansprüche, **dadurch gekennzeichnet, dass** ein Beisselement (70) vorgesehen ist, das sich von dem hier zweidimensional definierten Basikörper (12) in der dritten Dimension, in der Draufsicht nach hinten, wegerstreckt.

13. Farbwahlhilfskörper nach Anspruch 12, **dadurch gekennzeichnet, dass** das Beisselement (70) als von dem Basiskörper (12) separates Teil, insbesondere als separates Einwegteil, oder wiederverwendbar ausgebildet ist, oder einstückig zu diesem ausgebildet ist.

14. Farbwahlhilfskörper nach einem der vorhergehenden Ansprüche, **dadurch gekennzeichnet, dass** er wahlweise als Oberkiefer-Farbwahlhilfskörper als auch als Unterkiefer-Farbwahlhilfsörper einsetzbar ist.

15. Farbwahlhilfskörper nach einem der vorhergehenden Ansprüche, **dadurch gekennzeichnet, dass** der Basiskörper (12) mindestens einen Seitenschenkel, insbesondere zwei Seitenschenkel (54) aufweist, deren Länge mehr als 5 Millimeter beträgt und bevorzugt der Höhe eines menschlichen Zahns entspricht und deren Breite mindestens 3 Millimeter und bevorzugt zwischen 6 und 10 mm beträgt.

16. Farbwahlhilfskörper nach einem der vorhergehenden Ansprüche, **dadurch gekennzeichnet, dass** der Basiskörper (12) einen Mittelschenkel (52) mit einer Greifhandhabe (55) aufweist, welche insbesondere die Kodierparameter (50) gemäß Anspruch 8 trägt, wobei die Kodierparameter bevorzugt auf Kodier-Flächen angebracht sind.

17. System aus einer Kameravorrichtung (74) und einem Farbwahlhilfskörper (10) gemäß einem der vorhergehenden Ansprüche, **dadurch gekennzeichnet, dass** die Kameravorrichtung (74) einen Abstandshalter (80) aufweist, in deren Innenfläche insbesondere mindestens der Basiskörper (12) passt und der besonders bevorzugt lichtdicht gegenüber Fremdlicht ist.
